(19) Europäisches Patentamt
European Patent Office
Office européen des brevets

(11) EP 2 657 298 A1

(12) # EUROPÄISCHE PATENTANMELDUNG

(43) Veröffentlichungstag:
**30.10.2013 Patentblatt 2013/44**

(51) Int Cl.:
***C08L 69/00*** *(2006.01)*

(21) Anmeldenummer: **12166035.1**

(22) Anmeldetag: **27.04.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer MaterialScience AG**
**51373 Leverkusen (DE)**

(72) Erfinder: **Die Erfindernennung liegt noch nicht vor**

(54) **PC/ABS-Zusammensetzungen mit guter thermischer und chemischer Beständigkeit**

(57) Die vorliegende Erfindung betrifft Formmassen aus Polycarbonaten und Pfropfpolymerisaten sowie gegebenenfalls weiteren Additiven und Komponenten mit einem niedrigen Gehalt an freiem Bisphenol-A, die neben einer hohen Chemikalienbeständigkeit eine gute thermische Beständigkeit, insbesondere eine geringe Neigung zur Vergilbung und eine geringe Abbauneigung bei thermischer Belastung, aufweisen.

In einer besonderen, flammgeschützten Ausführungsform ist ferner Nachbrennzeit bei einer UL94 Klassifizierung reduziert.

EP 2 657 298 A1

## Beschreibung

Die vorliegende Erfindung betrifft Formmassen aus Polycarbonaten und Pfropfpolymerisaten sowie gegebenenfalls weiteren Additiven und Komponenten, die neben einer hohen Chemikalienbeständigkeit eine gute thermische Beständigkeit, insbesondere eine geringe Neigung zur Vergilbung und eine geringe Abbauneigung bei thermischer Belastung, aufweisen.

In einer besonderen, flammgeschützten Ausführungsform ist ferner die Nachbrennzeit bei einer UL94 Klassifizierung reduziert.

Thermoplastische Formmassen aus Polycarbonaten und ABS-Polymerisaten sind seit langem bekannt.

DE- A 1 170 141 beschreibt gut verarbeitbare Formmassen aus Polycarbonaten und Pfropfpolymerisaten von Monomermischungen aus Acrylnitril und einem aromatischen Vinylkohlenwasserstoff auf Polybutadien.

In der DE-A 1 810 993 wird die verbesserte Wärmestandfestigkeit von Polycarbonat in Abmischung mit ABS-Pfropfpolymerisaten bzw. Copolymerisaten auf Basis von $\alpha$-Methylstyrol beschrieben.

Gegenstand der DE-A 22 59 565 und DE-A 23 29 548 ist die verbesserte Fließnahtfestigkeit von PC/ABS-Formmassen, wobei in beiden Dokumenten als Bestandteil der ABS-Komponente jeweils Pfropfpolymerisate bestimmter Teilchengröße verwendet werden.

DE- A 28 18 679 beschreibt PC/ABS- Mischungen mit besonders hoher Tieftemperaturzähigkeit, wenn das ABS- Polymerisat zwei Pfropfmischpolymerisate mit unterschiedlichem Pfropfgrad enthält.

Die EP-A 900 827 offenbart schlagzähmodifzierte Polycarbonat-Zusammensetzungen mit verbesserter Thermostabilität enthaltend Emulsionspolymerisate, welche im wesentlichen frei von jeglichen basischen Komponenten sind, die das Polycarbonat abbauen. Gemäß dieser Anmeldung zeigen solche Polycarbonat-Zusammensetzungen, die mit Emulsionspolymerisaten schlagzähmodifiziert sind, die herstellungsbedingt basische Verunreinigungen enthalten, eine mangelhafte Thermostabilität.

EP 0 363 608 werden Polymermischungen aus aromatischem Polycarbonat, styrolhaltigen Copolymer oder Pfropfcopolymer sowie oligomeren Phosphaten als Flammschutzadditive beschrieben.

In der EP 0 704 488 werden Formmassen aus aromatischem Polycarbonat, styrolhaltigen Copolymerisaten und Pfropfpolymerisaten mit einer spezielllen Pfropfbasis in bestimmten Mengenverhältnissen beschrieben. Diese Frommassen können gegebenenfalls mit Phosphorverbindungen flammwidrig ausgerüstet werden.

EP 747 424 beschreibt thermoplastische Harze, die Phosphatverbindungen mit einem Molekulargewicht von 500 bis 2000 und Phosphatverbindungen mit einem Molekulargewicht von 2300 bis 11000 als Flammschutzmittel enthalte, wobei eine Vielzahl von thermoplastischen Harzen aufgezählt werden. Durch die hohen Molekulargewichte der Phosphorverbindungen wird das Fließverhalten der Formmassen deutlich beeinträchtigt.

In EP 1 003 809 werden PC/ABS-Formmassen beschrieben, die oligomere Phosphorverbindungen und Pfropfpolymerisate aus einer Pfropfgrundlage mit einer bestimmten Teilchengröße enthalten. Diese Formmassen zeichnen sich durch gute mechanische Eigenschaften, inbesondere auch unter erhöhter Elastizitätsbeanspruchung aus.

EP 0 983 315 beschreibt Formmassen aus aromatischem Polycarbonat, Pfropfpolymerisat und einer Flammschutzmittel-Kombination aus einer monomeren und einer oligomeren Phosphorverbindung. Diese Formmassen besitzen eine hohe Wärmeformbeständigkeit und exzellente mechanische Eigenschaften (Kerbschlagzähigkeit und Bindenahtfestigkeit).

In keinem der oben genannten Dokumente wird der Einfluß des Gehalts an freiem, d.h. chemisch nicht gebundenem, Bisphenol-A auf die thermische Stabilität oder die Vergilbungstendenz der Polycarbonat-Formmassen beschrieben, ebensowenig wie die Kombination dieser Eigenschaften mit einer verbesserten chemischen Beständigkeit.

Aufgabe der vorliegenden Erfindung war es somit, Polycarbonat-Formmassen bereitzustellen, die neben einer hohen Chemikalienbeständigkeit eine gute thermische Beständigkeit, insbesondere eine geringe Neigung zur Vergilbung und eine geringe Abbauneigung bei thermischer Belastung, aufweisen.

Eine weitere Aufgabe der vorliegenden Erfindung war es, bei flammgeschützten Ausführungsformen die oben genannten Eigenschaften zu erzielen und die Nachbrennzeit bei einer UL94 Klassifizierung zu reduzieren.

Überraschenderweise wurde nun gefunden, dass die o. g. Eigenschaften erhalten werden, wenn der Gehalt an monomeren, d.h. nicht im Polymer chemisch gebundenem Bisphenol-A (BPA) in der Polycarbonat-Formmasse 70 ppm, bezogen auf die gesamte Formmasse, nicht übersteigt.

Freies, d.h. chemisch nicht gebundenes, BPA kann beispielsweise als Verunreinigung in BPA- basierten Polycarbonat oder als Verunreinigung in BPA- basierten Flammschutzmitteln in die Zusammensetzungen eingetragen werden, oder aber auch während einer thermischen Beanspruchung der zuvorgenannten Komponenten entstehen.

Die so zusammengesetzten Formmassen zeichnen sich durch eine hohe Chemikalienbeständigkeit, eine gute thermische Beständigkeit, insbesondere eine geringe Neigung zur Vergilbung und eine geringe Abbauneigung bei thermischer Belastung, sowie in flammgeschützter Ausführungsform eine verringerte Nachbrennzeit aus.

Gegenstand der Erfindung sind thermoplastische Formmassen enthaltend

A) 51, 0 bis 99, 5 Gew.- Teile, vorzugsweise 61, 0 bis 96, 5 Gew.- Teile, besonders bevorzugt 71, 0 bis 86, 0 Gew.- Teile mindestens eines aromatischen Polycarbonats oder Polyestercarbonats,

B) 0, 5 bis 49, 0 Gew.- Teile, vorzugsweise 1, 0 bis 39, 0 Gew.- Teile, besonders bevorzugt 2, 0 bis 29, 0 Gew.- Teile mindestens eines Pfropfpolymerisats,

C) 0, 0- 30, 0 Gew.- Teile, bevorzugt 1, 0- 20, 0 Gew.- Teile, besonders bevorzugt 3, 0- 15, 0 Gew.- Teile Vinyl (Co) Polymerisat und/ oder Polyalkylenterephthalat,

D) 0, 0- 20, 0 Gew.- Teile, bevorzugt 1, 0- 18, 0 Gew.- Teile, besonders bevorzugt 8, 0- 15, 0 Gew.- Teile, mindestens eines phosphorhaltigen Flammschutzmittels,

E) 0, 0- 40, 0 Gew.- Teile, bevorzugt 0, 5- 10, 0 Gew.- Teile, besonders bevorzugt 1, 0- 6, 0 Gew.- Teile weitere übliche Additive,

wobei die Summe der Gewichtsteile der Komponenten A) bis E) sich zu 100 Gewichtsteilen addiert, und
wobei der Gehalt an freiem Bisphenol- A in der Gesamtzusammensetzung kleiner als 70 ppm, vorzugsweise kleiner als 50 ppm, weiter bevorzugt kleiner als 30 ppm, und
vorzugsweise > 0, 5 ppm, weiter bevorzugt > 1, 0 ppm, besonders bevorzugt > 2 ppm, ist.

In einer besonderen Ausführungsform sind Gegenstand der Erfindung nicht flammgeschützte, thermoplastische Formmassen enthaltend

A) 51, 0 bis 99, 5 Gew.- Teilen, vorzugsweise 61, 0 bis 93, 0 Gew.- Teilen, besonders bevorzugt 71, 0 bis 91, 0 Gew.- Teilen mindestens eines aromatischen Polycarbonats,

B) 0, 5 bis 49, 0 Gew.- Teilen, vorzugsweise 2, 5 bis 39, 0 Gew.- Teilen, besonders bevorzugt 5, 0 bis 35, 0 Gew.- Teilen mindestens eines Pfropfpolymerisats,

C) 0, 0- 40, 0 Gew.- Teile, bevorzugt 1, 5- 30, 0 Gew.- Teile, besonders bevorzugt 3, 5- 20, 0 Gew.- Teile Vinyl (Co) Polymerisat und/ oder Polyalkylenterephthalat

E) 0, 0- 40, 0 Gew.- Teile, bevorzugt 0, 1- 10, 0 Gew.- Teile, besonders bevorzugt 0, 5- 6, 0 Gew.- Teile weitere übliche Additive,

wobei die Summe der Gewichtsteile der Komponenten A) bis E) sich zu 100 Gewichtsteilen addiert, und
wobei der Gehalt an freiem Bisphenol- A in der Gesamtzusammensetzung kleiner als 70 ppm, vorzugsweise kleiner als 50 ppm, weiter bevorzugt kleiner als 30 ppm, und
vorzugsweise > 0, 5 ppm, weiter bevorzugt > 1, 0 ppm, besonders bevorzugt > 2 ppm, ist.

In einer besonderen Ausführungsform sind Gegenstand der Erfindung flammgeschützte, thermoplastische Formmassen enthaltend

A) 61, 0 bis 95, 0 Gew.- Teilen, vorzugsweise 66, 0 bis 90, 0 Gew.- Teilen, besonders bevorzugt 71, 0 bis 85, 0 Gew.- Teilen mindestens eines aromatischen Polycarbonats,

B) 0, 5 bis 20, 0 Gew.- Teilen, vorzugsweise 2, 0 bis 15, 0 Gew.- Teilen, besonders bevorzugt 5, 0 bis 12, 0 Gew.- Teilen mindestens eines Pfropfpolymerisats,

C) 0, 0- 20, 0 Gew.- Teile, bevorzugt 1, 0- 15, 0 Gew.- Teile, besonders bevorzugt 2, 0- 10, 0 Gew.- Teile Vinyl (Co) Polymerisat und/ oder Polyalkylenterephthalat

D) 1, 0- 20, 0 Gew.- Teile, bevorzugt 2, 0- 18, 0 Gew.- Teile, weiter bevorzugt 4, 0- 16, 0 Gew.- Teile, besonders bevorzugt 7, 0- 15, 0 Gew.- Teile, mindestens eines bevorzugt phosphorhaltigen Flammschutzmittels,

E) 0, 5- 20, 0 Gew.- Teile, bevorzugt 1, 0- 15, 0 Gew.- Teile, besonders bevorzugt 1, 0- 10, 0 Gew.- Teile weitere übliche Additive,

wobei die Summe der Gewichtsteile der Komponenten A) bis E) sich zu 100 Gewichtsteilen addiert, und
wobei der Gehalt an freiem Bisphenol- A in der Gesamtzusammensetzung kleiner als 70 ppm, vorzugsweise kleiner als

50 ppm, weiter bevorzugt kleiner als 30 ppm, und
vorzugsweise > 0, 5 ppm, weiter bevorzugt > 1, 0 ppm, besonders bevorzugt > 2 ppm, ist.

Zur Bestimmung des Gehalts an freiem Bisphenol-A wird die Probe in Dichlormethan gelöst und mit Methanol umgefällt. Der ausgefallene Polymeranteil wird abfiltriert und die Filtratlösung eingeengt. Der Gehalt an freiem BPA wird in der eingeengten Filtratlösung durch HPLC mit UV-Detektion (externer Standard) bestimmt.

Besonders bevorzugte Formmassen enthalten als Komponente E) neben optionalen weiteren Additiven ein Entformungsmittel, z.B. Pentaerythrittetrastearat, in 0,1 bis 1,5 Gew.-Teilen, vorzugsweise 0,2 bis 1,0 Gew.-Teile, besonders bevorzugt 0,3 bis 0,8 Gew.-Teilen.

Besonders bevorzugte Formmassen enthalten als Komponente E) neben optionalen weiteren Additiven mindestens einen Stabilisator, beispielsweise ausgewählt aus der Gruppe der sterisch gehinderten Phenole, Phosphite sowie Mischungen daraus und besonders bevorzugt Irganox® B900, in 0,01 bis 0,5 Gew.-Teilen, vorzugsweise 0,03 bis 0,4 Gew.-Teile, besonders bevorzugt 0,06 bis 0,3 Gew.-Teilen.

Besonders bevorzugte flammgeschützte Formmassen enthalten als Komponente E) neben optionalen weiteren Additiven ein fluoriertes Polyolefin in 0,05 bis 5,0 Gew.-Teilen, vorzugsweise 0,1 bis 2,0 Gew.-Teile, besonders bevorzugt 0,3 bis 1,0 Gew.-Teilen.

Weiterhin ist die Kombination der drei zuvorgenannten Additive PTFE, Pentaerythrittetrastearat und Irganox B900, als Komponente E besonders bevorzugt.

<u>Komponente A</u>

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Im Phasengrenzflächenverfahren hergestellte Polycarbonate werden erfindungsgemäß bevorzugt.

Weiter bevorzugt weisen die erfindungsgemäßen Polycarbonate eine OH-Endgruppenkonzentration kleiner als 300 ppm, besonders bevorzugt kleiner als 250 ppm, ganz bevorzugt kleiner als 200 ppm auf.

Die Bestimmung der OH-Endgruppenkonzentration erfolgt mittel Infrarotspektroskopie wie in Horbach, A.; Veiel, U.; Wunderlich, H., Makromolekulare Chemie 1965, Band 88, S. 215-231 beschrieben.

Diphenole zur Herstellung der aromatischen Polycarbonate und/oder aromatischen Polyestercarbonate sind vorzugsweise solche der Formel (I)

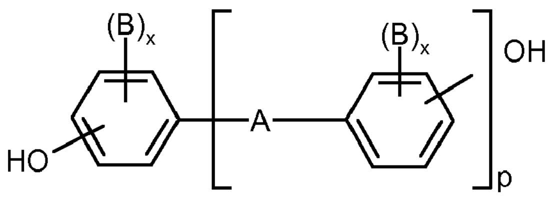

(I),

wobei

A eine Einfachbindung, $C_1$ bis $C_5$- Alkylen, $C_2$ bis $C_5$- Alkyliden, $C_5$ bis $C_6$- Cycloalkyliden, -O-, - SO-, - CO-, - S-, - $SO_2$-, $C_6$ bis $C_{12}$- Arylen, an das weitere aromatische gegebenenfalls Heteroatome enthaltende Ringe kondensiert sein können,
oder ein Rest der Formel (II) oder (III)

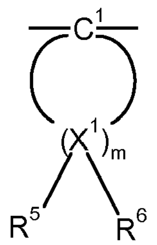

(II)

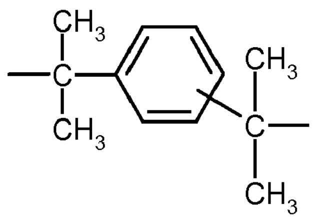

(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl, vorzugsweise Methyl oder Ethyl, sind.

Bevorzugte Diphenole sind Hydrochinon, Resorcin, Dihydroxydiphenole, Bis- (hydroxyphenyl)- $C_1$- $C_5$- alkane, Bis- (hydroxyphenyl)- $C_5$- $C_6$- cycloalkane, Bis- (hydroxyphenyl)- ether, Bis- (hydroxyphenyl)- sulfoxide, Bis- (hydroxyphenyl)- ketone, Bis- (hydroxyphenyl)- sulfone und $\alpha$, $\alpha$- Bis- (hydroxyphenyl)- diisopropyl- benzole sowie deren kernbromierte und/ oder kernchlorierte Derivate.

Besonders bevorzugte Diphenole sind 4, 4'- Dihydroxydiphenyl, Bisphenol- A, 2, 4- Bis (4- hydroxyphenyl)- 2-methylbutan, 1, 1- Bis- (4- hydroxyphenyl)- cyclohexan, 1, 1- Bis- (4- hydroxyphenyl)- 3.3.5- trimethylcyclohexan, 4, 4'-Dihydroxydiphenylsulfid, 4, 4'- Dihydroxydiphenylsulfon sowie deren di- und tetrabromierten oder chlorierten Derivate wie beispielsweise 2, 2- Bis (3- Chlor- 4- hydroxyphenyl)- propan, 2, 2- Bis- (3, 5- dichlor- 4- hydroxyphenyl)- propan oder 2, 2- Bis- (3, 5- dibrom- 4- hydroxyphenyl)- propan. Insbesondere bevorzugt ist 2, 2- Bis- (4- hydroxyphenyl)- propan (Bisphenol- A) .

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p- Chlorphenol, p- tert.- Butylphenol oder 2, 4, 6- Tribromphenol, aber auch langkettige Alkylphenole, wie 4- [2- (2, 4, 4- Trimethylpentyl) ]- phenol, 4- (1, 3- Tetramethylbutyl)- phenol gemäß DE- A 2 842 005 oder Monoalkylphenol oder Dialkylphenole mit insgesamt 8 bis 20 Kohlenstoffatomen in den Alkylsubstituenten, wie 3, 5- di- tert.-Butylphenol, p- iso- Octylphenol, p- tert.- Octylphenol, p- Dodecylphenol und 2- (3, 5- Dimethylheptyl)- phenol und 4- (3, 5- Dimethylheptyl)- phenol. Die Menge an einzusetzenden Kettenabbrechern beträgt im allgemeinen zwischen 0, 5 Mol%, und 10 Mol%, bezogen auf die Molsumme der jeweils eingesetzten Diphenole.

Die thermoplastischen, aromatischen Polycarbonate haben bevorzugt mittlere Gewichtsmittelmolekulargewichte ($M_w$, gemessen durch GPC (Gelpermeationschromatographie mit Polycarbonatstandard) von 10.000 bis 200.000 g/mol, vorzugsweise 15.000 bis 80.000 g/mol, weiter bevorzgut von 23.000 bis 32.000 besonders bevorzugt 26.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer

Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen.

Aromatische Dicarbonsäuredihalogenide zur Herstellung von aromatischen Polyestercarbonaten sind vorzugsweise die Disäuredichloride der Isophthalsäure, Terephthalsäure, Diphenylether- 4, 4'- dicarbonsäure und der Naphthalin- 2, 6- dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3, 3'-, 4, 4'- Benzophenon- tetracarbonsäuretetrachlorid, 1, 4, 5, 8- Napthalintetracarbon- säuretetrachlorid oder Pyromellithsäuretetrachlorid, in Mengen von 0, 01 bis 1, 0 Mol% (bezogen auf eingesetzte Dicarbonsäuredichloride) oder drei- oder mehrfunktionelle Phenole, wie Phloroglucin, 4, 6- Dimethyl- 2, 4, 6-tri- (4- hydroxyphenyl)- hept- 2- en, 4, 6- Dimethyl- 2, 4- 6- tri- (4- hydroxyphenyl)- heptan, 1, 3, 5- Tri- (4- hydroxyphenyl)-benzol, 1, 1, 1- Tri- (4- hydroxyphenyl)- ethan, Tri- (4- hydroxyphenyl)- phenylmethan, 2, 2- Bis [4, 4- bis (4- hydroxyphenyl)- cyclohexyl]- propan, 2, 4- Bis (4- hydroxyphenyl- isopropyl)- phenol, Tetra- (4- hydroxyphenyl)- methan, 2, 6-Bis (2- hydroxy- 5- methyl- benzyl)- 4- methyl- phenol, 2- (4- Hydroxyphenyl)- 2- (2, 4- dihydroxyphenyl)- propan, Tetra-(4- [4- hydroxyphenyl- isopropyl]- phenoxy)- methan, 1, 4- Bis [4, 4'- dihydroxytri- phenyl)- methyl]- benzol, in Mengen von 0, 01 bis 1, 0 Mol% bezogen auf eingesetzte Diphenole verwendet werden. Phenolische Verzweigungsmittel können mit den Diphenolen vorgelegt werden; Säurechlorid- Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Komponente B

Die Pfropfpolymerisate B umfassen z.B. Pfropfpolymerisate mit kautschukelastischen Eigenschaften, die im wesentlichen aus mindestens 2 der folgenden Monomeren erhältlich sind: Chloropren, Butadien- 1, 3, Isopren, Styrol, Acrylnitril, Ethylen, Propylen, Vinylacetat und (Meth- ) Acrylsäureester mit 1 bis 18 C- Atomen in der Alkoholkomponente; also Polymerisate, wie sie z.B. in "Methoden der Organischen Chemie" (Houben- Weyl), Bd. 14/1, Georg Thieme- Verlag, Stuttgart 1961, S. 393- 406 und in C.B. Bucknall, "Toughened Plastics", Appl. Science Publishers, London 1977, beschrieben sind.

Besonders bevorzugte Polymerisate B sind beispielsweise ABS- Polymerisate (Emulsions-, Masse- und Suspensions- ABS), wie sie z.B. in der DE- OS 2 035 390 (=US- PS 3 644 574) oder in der DE- OS 2 248 242 (=GB- PS 1 409 275) bzw. in Ullmanns, Enzyklopädie der Technischen Chemie, Bd. 19 (1980), S. 280 ff. beschrieben sind. Der Gelanteil der Pfropfgrundlage B. 2 beträgt mindestens 30 Gew.- %, vorzugsweise mindestens 40 Gew.- % (in Toluol gemessen) .

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.
Bevorzugte Polymerisate B sind partiell vernetzt und besitzen Gelgehalte (gemessen in Toluol) von über 20 Gew.-%, vorzugsweise über 40 Gew.-%, insbesondere über 60 Gew.-%.
Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).
Bevorzugte Pfropfpolymerisate B umfassen Pfropfpolymerisate aus:

B. 1) 5 bis 95, vorzugsweise 30 bis 80 Gew.- Teile, einer Mischung aus

B. 1.1) 50 bis 95 Gew.- Teilen Styrol, α- Methylstyrol, methylkernsubstituiertem Styrol, $C_1$- $C_8$- Alkylmethacrylat, insbesondere Methylmethacrylat, $C_1$- $C_8$- Alkylacrylat, insbesondere Methylacrylat, oder Mischungen dieser Verbindungen und

B. 1.2) 5 bis 50 0 Gew.- Teilen Acrylnitril, Methacrylnitril $C_1$- $C_8$- Alkylmethacrylaten, insbesondere Methylmethacrylat, $C_1$- $C_8$- Alkylacrylat, insbesondere Methylacrylat, Maleinsäureanhydrid, $C_1$- $C_4$- alkyl- bzw.- phenyl- N- substituierte Maleinimide oder Mischungen dieser Verbindungen auf

B. 2) 5 bis 95, vorzugsweise 20 bis 70 Gew.- Teilen einer kautschukhaltigen Pfropfgrundlage.

Vorzugsweise hat die Pfropfgrundlage eine Glasübergangstemperatur unter -10°C.
Glasübergangstemperaturen werden, soweit in der vorliegenden Erfindung nicht anders angegeben, mittels dynamischer Differenzkalorimetrie (DSC) gemäß der Norm DIN EN 61006 bei einer Heizrate von 10 K/min mit Definition der Tg als Mittelpunkttemperatur (Tangentenmethode) und Stickstoff als Schutzgas bestimmt.
Besonders bevorzugt ist eine Pfropfgrundlage auf Basis eines Polybutadienkautschuks.
Bevorzugte Pfropfpolymerisate B sind z.B. mit Styrol und/ oder Acrylnitril und/ oder (Meth- ) Acrylsäurealkylestern gepfropfte Polybutadiene, Butadien/ Styrol- Copolymerisate und Acrylatkautschuke; d.h. Copolymerisate der in der DE- OS 1 694 173 (= US- PS 3 564 077) beschriebenen Art; mit Acryl- oder Methacrylsäurealkylestern, Vinylacetat, Acrylnitril, Styrol und/ oder Alkylstyrolen gepfropfte Polybutadiene, Butadien/ Styrol- oder Butadien/ Acrylnitril- Copolymerisate, Polyisobutene oder Polyisoprene, wie sie z.B. in der DE- OS 2 348 377 (= US- PS 3 919 353) beschrieben sind.
Besonders bevorzuge Pfropfpolymerisate B sind Pfropfpolymerisate, die durch Pfropfreaktion von

I. 10 bis 70, vorzugsweise 15 bis 50, insbesondere 20 bis 40 Gew.- %, bezogen auf Pfropfprodukt, mindestens eines (Meth- ) Acrylsäureesters oder 10 bis 70, vorzugsweise 15 bis 50, insbesondere 20 bis 40 Gew.- % eines Gemisches aus 10 bis 50, vorzugsweise 20 bis 35 Gew.- %, bezogen auf Gemisch, Acrylnitril oder (Meth- ) Acrylsäureester und 50 bis 90, vorzugsweise 65 bis 80 Gew.- %, bezogen auf Gemisch, Styrol auf

II. 30 bis 90, vorzugsweise 40 bis 85, insbesondere 50 bis 80 Gew.- %, bezogen auf Pfropfprodukt, eines Butadien-Polymerisats mit mindestens 50 Gew.- %, bezogen auf II, Butadienresten als Pfropfgrundlage.

erhältlich sind.
Der Gelanteil dieser Pfropfgrundlage II beträgt vorzugsweise mindestens 70 Gew.-% (in Toluol gemessen), der Pfropfgrad G 0,15 bis 0,55 und der mittlere Teilchendurchmesser $d_{50}$ des Pfropfpolymerisats B 0,05 bis 2, vorzugsweise 0,1 bis 0,6 μm.
(Meth- ) Acrylsäureester I sind Ester der Acrylsäure oder Methacrylsäure und einwertiger Alkohole mit 1 bis 18 C- Atomen. Besonders bevorzugt sind Methacrylsäuremethylester, -ethylester und- propylester.
Die Pfropfgrundlage II kann neben Butadienresten bis zu 50 Gew.-%, bezogen auf II, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.
Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomeren in Gegenwart der Pfropfgrundlage gewonnen werden.
Der Pfropfgrad G bezeichnet das Gewichtsverhältnis von aufgepfropften Pfropfmonomeren zur Pfropfgrundlage und ist dimensionslos.
Die mittlere Teilchengröße $d_{50}$ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

Weitere bevorzugte Pfropfpolymerisate B sind z.B. auch Pfropfpolymerisate aus

(a) 20 bis 90 Gew.-%, bezogen auf B, Acrylatkautschuk als Pfropfgrundlage und

(b) 10 bis 80 Gew.-%, bezogen auf B, mindestens eines polymerisierbaren, ethylenisch ungesättigten Monomeren, dessen bzw. deren in Abwesenheit von a) entstandenen Homo- bzw. Copolymerisate eine Glasübergangstemperatur über 25°C hätten, als Pfropfmonomere.

Die Pfropfgrundlage aus Acrylatkautschukt hat bevorzugt eine Glasübergangstemperatur von kleiner als -20°C, vorzugsweise kleiner -30°C.

Die Acrylatkautschuke (a) der Polymerisate B sind vorzugsweise Polymerisate aus Acrylsäurealkylestern, gegebenenfalls mit bis zu 40 Gew.- %, bezogen auf (a), anderer polymerisierbarer, ethylenisch ungesättigter Monomerer. Zu den bevorzugten polymerisierbaren Acrylsäureestern gehören $C_1$- $C_8$- Alkylester, beispielsweise Methyl-, Ethyl-, n-Butyl-, n- Octyl- und 2- Ethylhexylester sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro- s- triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, $\alpha$- Methylstyrol, Acrylamide, Vinyl- $C_1$- $C_6$- alkylether, Methylmethacrylat, Butadien. Bevorzugte Acrylatkautschuke als Pfropfgrundlage (a) sind Emulsionspolymerisate, die einen Gelgehalt von mindestens 60 Gew.- % aufweisen.

Weitere geeignete Pfropfgrundlagen sind Silikonkautschuke mit pfropfaktiven Stellen und einem Gelgehalt von mindestens 40 % (gemessen in Dimethylformamid), wie sie in den Offenlegungsschriften DE 37 04 657, DE 37 04 655, DE 36 31 540 und DE 36 31 539 beschrieben werden sowie Silikon-Acrylat-Kompositkautschuke.

<u>Komponente C</u>

Die Komponente C umfasst ein oder mehrere thermoplastische Vinyl(Co)Polymerisate C.1 und/oder Polyalkylenterephthalate C.2.

Geeignet sind als Vinyl (Co) Polymerisate C. 1 Polymerisate von mindestens einem Monomeren aus der Gruppe der Vinylaromaten, Vinylcyanide (ungesättigte Nitrile), (Meth) Acrylsäure- ($C_1$- $C_8$)- Alkylester, ungesättigte Carbonsäuren sowie Derivate (wie Anhydride und Imide) ungesättigter Carbonsäuren. Insbesondere geeignet sind (Co) Polymerisate aus

C. 1.1 50 bis 99, vorzugsweise 60 bis 80 Gew.- Teilen Vinylaromaten und/ oder kernsubstituierten Vinylaromaten wie Styrol, $\alpha$- Methylstyrol, p- Methylstyrol, p- Chlorstyrol) und/ oder (Meth) Acrylsäure- ($C_1$- $C_8$)- Alkylester, wie Methylmethacrylat, Ethylmethacrylat), und

C. 1.2 1 bis 50, vorzugsweise 20 bis 40 Gew.- Teilen Vinylcyanide (ungesättigte Nitrile) wie Acrylnitril und Methacrylnitril und/ oder (Meth) Acryl- säure- ($C_1$- $C_8$)- Alkylester, wie Methylmethacrylat, n- Butylacrylat, t- Butylacrylat, und/ oder ungesättigte Carbonsäuren, wie Maleinsäure, und/ oder Derivate, wie Anhydride und Imide, ungesättigter Carbonsäuren, beispielsweise Maleinsäureanhydrid und N- Phenylmaleinimid) .

Die Vinyl(co)polymerisate C.1 sind harzartig, thermoplastisch und kautschukfrei. Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.- %, vorzugsweise mindestens 90 Gew.- %, bezogen auf die Dicarbonsäurekomponente Terephthalsäurereste und mindestens 80 Gew.- %, vorzugsweise mindestens 90 Mol- %, bezogen auf die Diolkomponente Ethylenglykol- und/ oder Butandiol- 1, 4- Reste.

Die bevorzugten Polyalkylenterephthalate können neben Terephthalsäureresten bis zu 20 Mol- %, vorzugsweise bis zu 10 Mol- %, Reste anderer aromatischer oder cycloaliphatischer Dicarbonsäuren mit 8 bis 14 C- Atomen oder aliphatischer Dicarbonsäuren mit 4 bis 12 C- Atomen enthalten, wie z.B. Reste von Phthalsäure, Isophthalsäure, Naphthalin- 2, 6- dicarbonsäure, 4, 4'- Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol- 1, 4- Resten bis zu 20 Mol- %, vorzugsweise bis zu 10 Mol- %, andere aliphatische Diole mit 3 bis 12 C- Atomen oder cycloaliphatische Diole mit 6 bis 21 C- Atomen enthalten, z.B. Reste von Propandiol- 1, 3, 2- Ethylpropandiol- 1, 3, Neopentylglykol, Pentandiol- 1, 5, Hexandiol- 1, 6, Cyclohexan- dimethanol- 1, 4, 3- Ethylpentandiol- 2, 4, 2- Methylpentandiol- 2, 4, 2, 2, 4- Trimethylpentandiol- 1, 3, 2- Ethylhexandiol- 1, 3, 2, 2- Diethylpropandiol- 1, 3, Hexandiol- 2, 5, 1, 4- Di- (β- hydroxyethoxy)- benzol, 2, 2- Bis- (4- hydroxycyclohexyl)- propan, 2, 4- Dihydroxy- 1, 1, 3, 3- tetramethyl- cyclobutan, 2, 2- Bis- (4- β- hydroxyethoxy- phenyl)- propan und 2, 2- Bis- (4- hydroxypropoxyphenyl)- propan (DE- A 2 407 674, 2 407 776, 2 715 932) .

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.- %, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenovo-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff- Handbuch, Band VIII, S. 695 ff., Carl- Hanser- Verlag, München 1973) .

Komponente D

Phosphorhaltige Flammschutzmittel D im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (V)

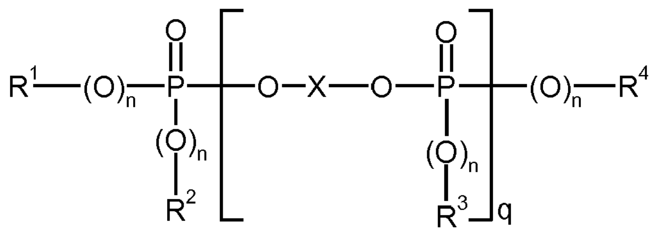

(V)

worin

R1, R2, R3 und R4, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis

C6-Cycloalkyl, C6 bis C20-Aryl oder C7 bis C12-Aralkyl,

n unabhängig voneinander, 0 oder 1,

q 0 bis 30 und

X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu acht Etherbindungen enthalten kann, bedeuten.

Bevorzugt stehen R1 R2, R3 und R4 unabhängig voneinander für C1 bis C4- Alkyl, Phenyl, Naphthyl oder Phenyl- C1- C4- alkyl. Die aromatischen Gruppen R1, R2, R3 und R4 können ihrerseits mit Halogen- und/ oder Alkylgruppen, vorzugsweise Chlor, Brom und/ oder C1 bis C4- Alkyl substituiert sein. Besonders bevorzugte Aryl- Reste sind Kresyl, Phenyl, Xylenyl, Propylphenyl oder Butylphenyl sowie die entsprechenden bromierten und chlorierten Derivate davon.

X in der Formel (V) bedeutet bevorzugt einen ein- oder mehrkernigen aromatischen Rest mit 6 bis 30 C-Atomen. Dieser leitet sich bevorzugt von Diphenolen der Formel (I) ab.

n in der Formel (V) kann, unabhängig voneinander, 0 oder 1 sein, vorzugsweise ist n gleich 1.

q steht für ganzzahlige Werte von 0 bis 30, bevorzugt 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00, und besonders bevorzugt von 1,08 bis 1,60.

X steht besonders bevorzugt für

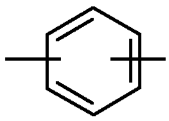 , 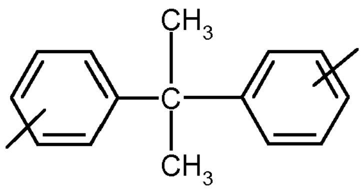 , 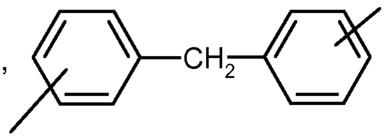 ,

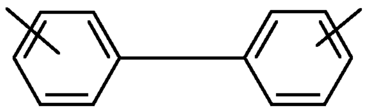 , 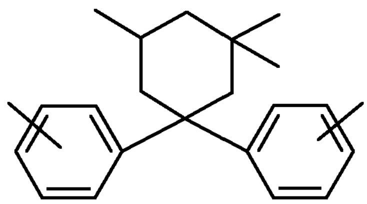

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Phosphorverbindungen der Formel (V) sind insbesondere Tributylphosphat, Triphenylphosphat, Trikresylphosphat, Diphenylkresylphosphat, Diphenyloctylphosphat, Diphenyl- 2- ethylkresylphosphat, Tri- (isopropylphenyl)- phosphat, Resorcin verbrücktes Oligophosphat und Bisphenol A verbrücktes Oligophosphat. Der Einsatz von oligomeren Phosphorsäureestern der Formel (V), die sich vom Bisphenol A ableiten, ist insbesondere bevorzugt.

Höchst bevorzugt als Komponente D ist Bisphenol-A basierendes Oligophosphat gemäß Formel (Va).

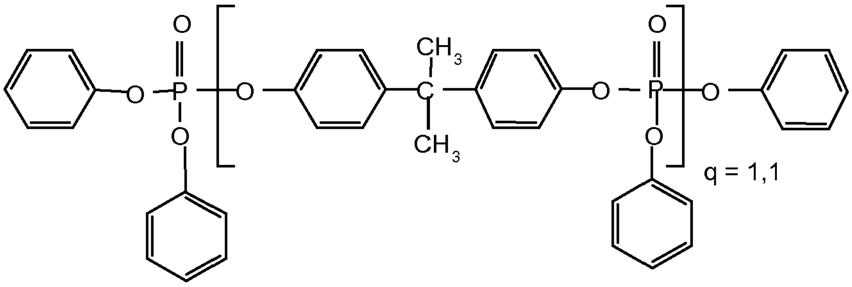

q = 1,1

(Va)

Die Phosphorverbindungen gemäß Komponente D sind bekannt (vgl. z.B. EP-A 0 363 608, EP-A 0 640 655)

oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Als erfindungsgemäße Komponente D können auch Mischungen von Phosphaten mit unterschiedlicher chemischer Struktur und/oder mit gleicher chemischer Struktur und verschiedenem Molekulargewicht eingesetzt werden.

Vorzugsweise werden Mischungen mit gleicher Struktur und unterschiedlicher Kettenlänge verwendet, wobei es sich bei dem angegebenen q-Wert um den mittleren q-Wert handelt. Der mittlere q-Wert wird bestimmt, indem mittels High Pressure Liquid Chromatography (HPLC) bei 40°C in einem Gemisch aus Acetonitril und Wasser (50:50) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Wenn die erfindungsgemäßen Zusammensetzungen flammhemmend ausgestattet sind, ist vorzugsweise zusätzlich ein Antidrippingmittel, vorzugsweise Polytetrafluorethylen (PTFE), enthalten.

<u>Kompenente E</u>

Die Zusammensetzung kann weitere übliche Polymeradditive wie Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl Sulfonate oder Polyamid-haltige Polymere) sowie Farbstoffe und Pigmente enthalten.

Insbesondere wird als Antidrippingmittel Polytetrafluorethylen (PTFE) oder PTFE-haltige Zusammensetzungen wie beispielsweise Masterbatche von PTFE mit styrol- oder methylmethacrylat enthaltenden Polymeren oder Copolymeren, als Pulver oder als koagulierte Mischung, z.B. mit Komponente B oder C, eingesetzt.

Die als Antidrippingmittel eingesetzten fluorierten Polyolefine sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1000, vorzugsweise 0,08 bis 20 $\mu$m. Im allgemeinen haben die fluorierten Polyolefine eine Dichte von 1,2 bis 2,3 g/cm$^3$. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Geeignete, in Pulverform einsetzbare fluorierte Polyolefine D sind Tetrafluorethylenpolymerisate mit mittleren Teilchendurchmesser von 100 bis 1000 $\mu$m und Dichten von 2, 0 g/cm$^3$ bis 2, 3 g/cm$^3$. Geeignete Tetrafluorethylenpolymerisat- Pulver sind handelsübliche Produkte und werden beispielsweise von der Fa. DuPont unter dem Handelsnamen Teflon® angeboten.

Als Stabilisatoren gemäß Komponente G werden bevorzugt sterisch gehinderte Phenole und Phosphite oder deren Gemische, wie beispielsweise Irganox© B900 (BASF), verwendet. Pentaerythrittetrastearat wird bevorzugt als Entformungsmittel verwendet.

In einer weiter bevorzugten Ausführungsform werden als Additive sterisch gehinderte Phenole und Phosphite oder deren Gemische, Entformungsmittel und Pigmente, vorzugsweise Ruß oder Titandioxid, eingesetzt.

Die Komponente E umfaßt auch verstärkende und nicht verstärkende Füllstoffe. Beispiele für verstärkende Füllstoffe sind Glaskugeln, Glimmer, Silikate, Quarz, Talkum, Titandioxid, Wollastonit, sowie pyrogene oder gefällte Kieselsäuren mit BET-Oberflächen von mindestens 50 m$^2$/g (nach DIN 66131/2). Besonders bevorzugt ist Talk als Füllstoff.

In einer alternativen Ausführungsform können feinstteilige anorganische Pulver zum Einsatz kommen.

Bevorzugt bestehen die feinstteiligen anorganischen Pulver aus Oxiden, Phosphaten, Hydroxiden, vorzugsweise aus $TiO_2$, $SiO_2$, $SnO_2$, ZnO, ZnS, Böhmit, $ZrO_2$, $Al_2O_3$, Aluminiumphosphate, Eisenoxide, ferner TiN, WC, AlO (OH), $Sb_2O_3$, Eisenoxide, $NaSO_4$, Vanadiumoxide, Zinkborat, Silicate wie Al-Silikate, Mg-Silikate, ein-, zwei-, dreidimensionale Silikate. Mischungen und dotierte Verbindungen sind ebenfalls verwendbar.

Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen. Besonders bevorzugt sind hydrathaltige Aluminiumoxide, z.B. Böhmit oder $TiO_2$.

Die durchschnittlichen Teilchendurchmesser der Nanopartikel sind kleiner gleich 200 nm, bevorzugt kleiner gleich 150 nm, insbesondere 1 bis 100 nm. Teilchengröße und Teilchendurchmesser bedeutet immer den mittleren Teilchendurchmesser $d_{50}$, ermittelt durch Ultrazentrifugenmessungen nach W. Scholtan et al., Kolloid-Z. und Z. Polymere 250 (1972), S. 782-796.

Die erfindungsgemäßen Formmassen, enthaltend die Komponenten A bis D und gegebenenfalls weiteren bekannten Zusätzen E wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 330°C in üblichen Aggregaten wie Innenknetern, Extrudern und Doppelwellenschnecken schmelzcompoundiert oder schmelzextrudiert.

Gegenstand der vorliegenden Erfindung ist somit auch ein Verfahren zur Herstellung von thermoplastischen Formmassen, enthaltend die Komponenten A bis E, die nach erfolgter Vermischung bei Temperaturen von 200 bis 330°C in gebräuchlichen Aggregaten schmelzcompoundiert oder schmelzextrudiert werden.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte, wie TV- und HiFi-Geräte, Kaffeemaschinen, Mixer, Büromaschinen, wie Monitore oder Drucker, oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Gehäuseteilen im Elektro- und Elektronikbereich.

Eine weitere Form der Verarbeitung ist die Herstellung von Formkörpern durch Blasformen oder durch Tiefziehen aus vorher hergestellten Platten oder Folien.

<u>Herstellung und Prüfung der Formmassen</u>

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Schmelzetemperatur gemessen am Düsenaustritt von 260°C compoundiert und granuliert. Die fertigen Granulate werden auf einer Spritzgussmaschine zu den entsprechenden Probekörpern verarbeitet (wenn in Tabellen 1 und 2 nicht anders vermerkt lag die Massetemperatur bei flammgeschützten Zusammensetzungen bei 240 °C bzw. bei nicht flammgeschützten Zusammensetzungen bei 260°C; Werkzeugtemperatur 80°C, Fließfrontgeschwindigkeit 240 mm/s).

Zur Charakterisierung der Eigenschaften der Probekörper wurden folgende Methoden angewandt:

Die Schmelzefließfähigkeit (MVR) wird beurteilt anhand der Schmelzevolumenfließrate (MVR) gemessen gemäß ISO 1133 bei einer Temperatur von 240°C (flammgeschützt) bzw. 260 °C (nicht flammgeschützt) und mit einer Stempellast von 5 kg.

Das Brandverhalten wird nach UL 94V an Stäben der Abmessung 127 x 12,7 x 1,5 mm gemessen.

Das ESC- Verhalten wurde gemäß ISO 4599 (Environmental Stress Cracking (ESC)- Test) bei Raumtemperatur (23 °C) und bei 2, 4% Randfaserdehnung in einer Handcreme (Sebamed® Hand+Nagelbalsam basierend auf Wasser, PPG- 2 Myristyletherpropionat, hydrogenierte Kokosglyceride, Glycerin, Glycerylcocoate, hydrogeniertes Cocosöl, , Sorbitol, Panthenol und Ceteareth- 25) gemessen.

Die Wärmeformbeständigkeit wurde gemessen gemäß DIN ISO 306 (Vicat- Erweichungstemperatur, Verfahren B mit 50 N Belastung und einer Heizrate von 120 K/h) an einem einseitig angespritzten Prüfstab der Dimension 80 mm x 10 mm x 4 mm.

Der Yellownessindex (YI) wird bestimmt an Farbmusterplatten mit den Abmessungen 60 x 40 x 2 mm gemäß der ASTM-Norm E-313-96 (Lichtart: C, Beobachter: 2°, Messöffnung: Large Area Value) nach der Gleichung YI = (128X - 106Z)/Y, mit X,Y,Z = Farbkoordinaten gemäß DIN 5033. Die Farbmusterplatten wurden bei 310 °C für flammgeschützte Formmassen und 320 °C für nicht flammgeschützte Formmassen gespritzt.

Als Maß für die Verarbeitungsstabilität der so hergestellten Zusammensetzungen dient die Änderung (in Prozent) des MVR gemessen nach ISO 1133 bei 260°C für nicht flammgeschützte und bei 240°C für flammgeschützte PC/ABS-Zusammensetzungen mit einer Stempellast von 5kg bei einer 15-minütigen Verweilzeit der Schmelze unter Luftausschluss bei einer Temperatur von 300°C. Die resultierende Größe ΔMVR(proc.) berechnet sich durch nachstehende Formel.

$$\Delta MVR(proc.) = \frac{MVR(nachSchmelzelagerung) - MVR(vor\,Lagerung)}{MVR(vor\,Lagerung)} \bullet 100\%$$

Die folgenden Beispiele dienen der weiteren Erläuterung der Erfindung.

## Beispiele

### Komponente A-1

Lineares Polycarbonat auf Basis Bisphenol-A hergestellt im Phasengrenzflächenverfahren mit einem gewichtsgemittelten Molekulargewicht $\overline{M}_w$ von 27000 g/mol (bestimmt durch GPC in Dichlormethan mit Polycarbonat als Standard). Der BPA-Gehalt des eingesetzten Polycarbonat A-1 betrug 3 ppm. Diese niedrigen BPA-Gehalte werden dadurch erhalten, dass man übliches Polycarbonat auf einen Extruder bei Temperaturen oberhalb 300°C unter Anwendung von Vakuum entgast und damit das unter diesen Bedingungen flüchtige BPA ausdampft. Die Komponente A-1 weist einen OH-Endgruppengehalt von 150 ppm auf.

### Komponente A-2

Lineares Polycarbonat auf Basis Bisphenol-A hergestellt im Schmelzverfahren mit einem gewichtsgemittelten Molekulargewicht $\overline{M}_w$ von 27000 g/mol (bestimmt durch GPC in Dichlormethan mit Polycarbonat als Standard) (BPA-Gehalt 32 ppm). Die Komponente A-2 weist einen OH-Endgruppengehalt von 480 ppm auf.

### Komponente B-1

Sauer gefälltes ABS- Pfropfpolymerisat mit Kern- Schale- Struktur, hergestellt durch EmulsionsPolymerisation von 43 Gew.- % bezogen auf das ABS- Polymerisat einer Mischung aus 28 Gew.- % Acrylnitril und 72 Gew.- % Styrol in Gegenwart von 57 Gew.- % bezogen auf das ABS- Polymerisat eines teilchenförmig vernetzten Polybutadienkautschuks (mittlerer Teilchendurchmesser $d_{50}$ = 0, 35 µm) .

### Komponente B-2

Basisch gefälltes ABS- Pfropfpolymerisat mit Kern- Schale- Struktur, hergestellt durch EmulsionsPolymerisation von 50 Gew.- % bezogen auf das ABS- Polymerisat einer Mischung aus 23 Gew.- % Acrylnitril und 77 Gew.- % Styrol in Gegenwart von 50 Gew.- % bezogen auf das ABS- Polymerisat eines teilchenförmig vernetzten Polybutadienkautschuks (mittlerer Teilchendurchmesser $d_{50}$ = 0, 25 µm) .

### Komponente C

Copolymerisat aus 77 Gew.-% Styrol und 23 Gew.-% Acrylnitril mit einem gewichtsgemittelten Molekulargewicht Mw von 130000 g/mol (bestimmt durch GPC), hergestellt nach dem Masseverfahren.

### Komponente D

Bisphenol- A basierendes Oligophosphat

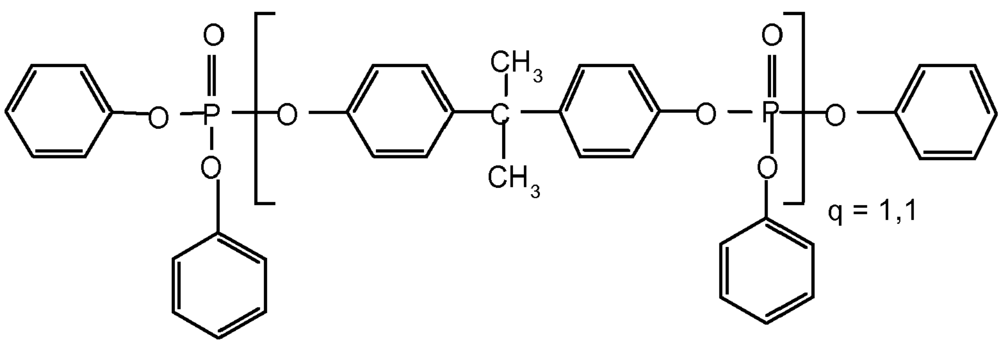

### Komponente E-1

Koagulierte Mischung von Emulsionen fluorierter Polyolefine mit Emulsionen eines Copolymerisats auf Styrol-Acrylnitril-Basis (Cycolac INP 449 der Fa. Sabic).

**Komponente E-2**

Pentaerythrittetrastearat als Gleit-/Entformungsmittel

**Komponente E-3**

Phosphitstabilisator, Irganox® B900 (Gemisch aus 80% Irgafos® 168 und 20% Irganox® 1076; BASF AG; Ludwigshafen / Irgafos® 168 (Tris (2, 4- di- tert- butyl- phenyl)- phosphit) / Irganox® 1076 (2, 6- Di- tert- butyl- 4- (octadecanoxycarbonylethyl) phenol)

**Komponente E-4**

Als zusätzlicher Stabilisator wird Pural 200 eingesetzt (feinstteiliges Aluminiumoxid-hydroxid (Fa. Condea, Hamburg, Deutschland) mit einer mittleren Teilchengröße des Materials von 50 nm).

**Tabelle 1:** Zusammensetzung und Eigenschaften der nicht flammgeschützten Formmassen

| **Komponenten (Gew.-Teile)** | Bsp. 1 | Bsp. 2 |
|---|---|---|
| A1 | 70,0 | |
| A2 | | 70,0 |
| B | 15,0 | 15,0 |
| C2 | 15,0 | 15,0 |
| F-1 | 0,5 | 0,5 |
| F-2 | 0,1 | 0,1 |
| BPA-Gehalt gemessen [ppm] | 17 | 76 |
| **Eigenschaften** | | |
| Vicat B 120 | 130 | 129 |
| MVR 260°C/5kg [ccm/10 min] | 16,7 | 26,7 |
| MVR 260°C/5kg nach Thermo-Lagerung 300°C/15 min [ccm/10 min] | 38,7 | 96,5 |
| delta MVR nach Thermo-Lagerung 300°C/15 min [%] | 132 | 261 |
| ESC-Test (Handlotion), 2, 4%, Zeit bis zum Bruch, 260°C [h] | 18,0 | 5,3 |
| Yellowness Index an MPL 320°C | 22,3 | 39,5 |

Aus Tabelle 1 ist ersichtlich, dass die erfindungsgemäße Zusammensetzung gemäß Beispiel 1 im Vergleich zu Beispiel 2 einen geringeren Anstieg der Schmelzeflussrate nach Lagerung bei 300°C, also eine höhere thermische Stabilität des Polycarbonat-Molekulargewichtes aufweist. Auch die chemische Beständigkeit in der untersuchten Handcreme ist deutlich besser. Gleichzeitig ist der Yellowness Index der BPA-armen Zusammensetzung bei hohen Verarbeitungstemperaturen geringer. Höhere BPA-Gehalte führen also in PC/ABS-Zusammensetzungen zu verschlechterten technischen Eigenschaften.

Die Beispiele in Tabelle 1 zeigen darüber hinaus, dass bei Verwendung basisch gefällter Pfropfpolymerisate gemäß Komponente B in den nicht flammwidrig ausgerüsteten erfindungsgemäßen Zusammensetzungen überraschend bei Verwendung von Polycarbonat, welches im Phasengrenzflächenverfahren hergestellt wurde, der Gehalt an freiem BPA bei der Compoundierung deutlich weniger ansteigt (von 2 ppm aus dem Polycarbonat stammend auf 17 ppm gemessen in der compoundierten Zusammensetzung, also um 15 ppm) als bei Verwendung von Polycarbonat, welches im Schmelzepolymersiationsverfahren hergestellt wurde (von 22 ppm aus dem Polycarbonat stammend auf 76 ppm gemessen in der compoundierten Zusammensetzung, also um 54 ppm). Bei nicht flammwidrig ausgerüsteten Zusammensetzungen, bei denen ein basisch gefälltes oder basisch verunreinigtes Pfropfpolymersiat zum Einsatz kommt, ist somit die Verwendung von Polycarbonat hergestellt im Phasengrenzflächenverfahren besonders bevorzugt.

**Tabelle 2:** Zusammensetzung und Eigenschaften der flammgeschützten Formmassen

| **Komponenten (Gew.-Teile)** | Bsp. 3 | Bsp. 4 | Bsp. 5 | Bsp. 6 | Bsp. 7 (Vgl) | Bsp. 8 (Vgl) | Bsp. 9 (Vgl) | Bsp. 10 (Vgl) |
|---|---|---|---|---|---|---|---|---|
| A-1 | 77,5 | 77,5 | 77,5 | 77,5 | 77,5 | 77,5 | 77,5 | 77,5 |
| B-1 | 3,5 | 3,5 | 3,5 | 3,5 | 3,5 | 3,5 | 3,5 | 3,5 |
| C | 7,7 | 7,7 | 7,7 | 7,7 | 7,7 | 7,7 | 7,7 | 7,7 |
| D | 9,7 | 9,7 | 9,7 | 9,7 | 9,7 | 9,7 | 9,7 | 9,7 |
| E-1 | 0,8 | 0,8 | 0,8 | 0,8 | 0,8 | 0,8 | 0,8 | 0,8 |
| E-2 | 0,4 | 0,4 | 0,4 | 0,4 | 0,4 | 0,4 | 0,4 | 0,4 |
| E-3 | 0,1 | 0,1 | 0,1 | 0,1 | 0,1 | 0,1 | 0,1 | 0,1 |
| E-4 | 0,3 | 0,3 | 0,3 | 0,3 | 0,3 | 0,3 | 0,3 | 0,3 |
| BPA-Gehalt gemessen [ppm] | 3 | 22 | 49 | 63 | 96 | 114 | 153 | 207 |
| zugesetztes BPA [ppm] | 0 | 20 | 40 | 60 | 80 | 100 | 150 | 200 |
| **Eigenschaften** | | | | | | | | |
| Vicat B 120 | 109 | 109 | 109 | 109 | 109 | 109 | 109 | 109 |
| UL 94 V bei 1,5 mm (7d/ 70°C) Dicke/ Gesamtnachbrennzeit | V-0/7s | V-0/7s | V-0/8s | V-0/8s | V-0/10s | V-0/11 s | V-0/11 s | V-0/12s |
| MVR240°C/5kg[ccm/ 10min] | 10,71 | 10,80 | 10,97 | 11,10 | 11,30 | 11,40 | 11,50 | 11,70 |
| MVR 240°C/5 min nach Thermo-Lagerung 300°C/15 min [ccm/10 min] | 15,90 | 16,90 | 17,80 | 18,30 | 19,10 | 19,40 | 19,90 | 20,70 |
| delta MVR nach Thermo-Lagerung 300°C/15 min [%] | 48,4 | 56,4 | 62,2 | 64,8 | 69,0 | 70,2 | 73,0 | 76,9 |
| ESC-Test (Handcreme), 2, 4%, Zeit bis zum Bruch, 260°C [h: mm: sec] | 85:45: 00 | 83:40: 00 | 83:15: 00 | 82:25: 00 | 81:10: 00 | 75:35: 00 | 74:45: 00 | 70:00: 00 |
| Yellowness Index an MPL 310°C | 29,98 | 31,16 | 32,15 | 33,18 | 33,22 | 33,42 | 33,57 | 38,05 |

Grundsätzlich kann freies, d.h. chemisch nicht gebundenes, BPA beispielsweise als Verunreinigung in BPA-basierten Polycarbonat oder als Verunreinigung in BPA-basierten Flammschutzmitteln in die Zusammensetzungen eingetragen werden, oder aber auch während einer thermischen Beanspruchung der zuvorgenannten Komponenten entstehen. In den erfindungsgemäßen Beispielen 4-6 sowie in den Vergleichsbeispielen 7-10 wurde definierte geringe Anteile BPA dem BPA-armen Polycarbonat A-1 zugesetzt, um den Einfluß von BPA zu untersuchen. Alle Formmassen wurden unter schonenden Bedingungen hergestellt, um nicht zusätzlich und unkontrolliert BPA durch Zerzetzung von Polycarbonat in den Formmassen zu erzeugen.

In Tabelle 2 sind die Eigenschaften von flammgeschützten PC/ABS-Zusammensetzungen mit verschieden BPA-Gehalten zusammengefasst. Auch in den flammgeschützten Zusammensetzungen wird deutlich, dass die erfindungsgemäßen Zusammensetzungen gemäß Beispielen 3-6 im Vergleich zu den Beispielen 7-10 geringere Schmelzeviskositäten und geringere Anstiege der Schmelzeviskositäten nach Lagerung bei 300°C, also deutlich höhere thermische Stabilitäten aufweisen. Auch die chemische Beständigkeit in der untersuchten Handcreme ist deutlich besser. Gleichzeitig ist der Yellowness Index der BPA-armen Zusammensetzungen geringer. Höhere BPA-Gehalte führen also in PC/ABS-Zusammensetzungen zu verschlechterten technischen Eigenschaften, während niedrigere BPA-Gehalte kleiner 70 ppm überraschenderweise zu deutlich besseren Eigenschaften führen.

**Patentansprüche**

1. Thermoplastische Formmassen enthaltend

   A) 51,0 bis 99,5 Gew.-Teilen mindestens eines aromatischen Polycarbonats,
   B) 0,5 bis 49,0 Gew.-Teilen mindestens eines Pfropfpolymerisats,
   C) 0,0 - 30,0 Gew.-Teile Vinyl(Co)Polymerisat und/oder Polyalkylenterephthalat,
   D) 0,0 - 20,0 Gew.-Teile mindestens eines phosphorhaltigen Flammschutzmittels,
   E) 0,0 - 40,0 Gew.-Teile weitere übliche Additive,

   wobei die Summe der Gewichtsteile der Komponenten A) bis E) sich zu 100 Gewichtsteilen addiert, und wobei der Gehalt an freiem Bisphenol-A in der Gesamtzusammensetzung kleiner als 70 ppm und größer als 0,5 ppm ist.

2. Formmasse nach Anspruch 1 enthaltend

   A) 51,0 bis 99,5 Gew.-Teile mindestens eines aromatischen Polycarbonats,
   B) 0,5 bis 49,0 Gew.-Teilen mindestens eines Pfropfpolymerisats,
   C) 0,0 - 40,0 Gew.-Teile Vinyl(Co)Polymerisat und/oder Polyalkylenterephthalat,
   E) 0,0 - 40,0 Gew.-Teile weitere übliche Additive,

   wobei die Summe der Gewichtsteile der Komponenten A) bis E) sich zu 100 Gewichtsteilen addiert, und wobei der Gehalt an freiem Bisphenol-A in der Gesamtzusammensetzung kleiner als 70 ppm und größer als 0,5 ppm ist, und wobei die Formassen frei von Komponente D sind.

3. Formmasse nach Anspruch 1 enthaltend

   A) 61,0 bis 95,0 Gew.-Teile mindestens eines aromatischen Polycarbonats,
   B) 0,5 bis 20,0 Gew.-Teile mindestens eines Pfropfpolymerisats,
   C) 0,0 bis 20,0 Gew.-Teile Vinyl(Co)Polymerisat und/oder Polyalkylenterephthalat
   D) 1,0 bis 20,0 Gew.-Teile mindestens eines phosphorhaltigen Flammschutzmittels,
   E) 0,5 bis 20,0 Gew.-Teile weitere übliche Additive,

   wobei die Summe der Gewichtsteile der Komponenten A) bis E) sich zu 100 Gewichtsteilen addiert, und wobei der Gehalt an freiem Bisphenol-A in der Gesamtzusammensetzung kleiner als 70 ppm und größer als 0,5 ppm ist.

4. Formmasse nach einem der Ansprüche 1 bis 3, **dadurch gekennzeichnet, daß** der Gehalt an freiem Bisphenol-A in der Gesamtzusammensetzung kleiner als 50 ppm und größer als 0,5 ppm ist.

5. Formmasse nach einem der Ansprüche 1 bis 3, **dadurch gekennzeichnet, daß** der Gehalt an freiem Bisphenol-A in der Gesamtzusammensetzung kleiner als 30 ppm und größer als 0,5 ppm ist.

6. Formmasse nach einem der Ansprüche 1 bis 3, **dadurch gekennzeichnet, daß** die Komponente A ein mittleres Gewichtsmittelmolekulargewicht $M_w$ von 26.000 bis 32.000 g/mol aufweist.

7. Formmasse nach einem der Ansprüche 1 bis 3, **dadurch gekennzeichnet, daß** die Komponente A eine OH-Endgruppenkonzentration kleiner als 200 ppm aufweist.

8. Formmasse nach Anspruch 7, **dadurch gekennzeichnet, daß** Komponente B) ein basisch gefälltes oder basisch verunreinigtes Pfropfpolymerisat ist und zusätzlich **dadurch gekennzeichnet, daß** die Formmasse keine Komponente D enthält.

9. Formmasse nach einem der Ansprüche 1 bis 3, **dadurch gekennzeichnet, daß** als Komponente E) neben optionalen weiteren Additiven mindestens ein Stabilisator in einer Konzentration von 0,01 bis 0,5 Gew.-Teilen enthalten ist.

10. Formmasse nach einem der Ansprüche 1 bis 3, **dadurch gekennzeichnet, daß** als Komponente E) neben optionalen weiteren Additiven ein fluoriertes Polyolefin in einer Konzentration von 0,05 bis 5,0 Gew.-Teilen enthalten ist.

**11.** Formmasse nach einem der Ansprüche 1 bis 3, **dadurch gekennzeichnet, daß** das phosphorhaltiges Flammschutzmittel (D) ein Flammschutzmittel der allgemeinen Formel (V) ist

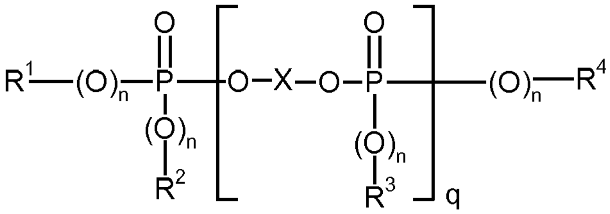

(V),

worin
$R^1$, $R^2$, $R^3$ und $R^4$, unabhängig voneinander jeweils gegebenenfalls halogeniertes $C_1$ bis $C_8$- Alkyl, jeweils gegebenenfalls durch Alkyl, vorzugsweise $C_1$ bis $C_4$- Alkyl, und/ oder Halogen, vorzugsweise Chlor, Brom, substituiertes $C_5$ bis $C_6$- Cycloalkyl, $C_6$ bis $C_{20}$- Aryl oder $C_7$ bis $C_{12}$- Aralkyl,

n unabhängig voneinander, 0 oder 1
q 0,80 bis 5,00 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

**12.** Formmasse nach einem der Ansprüche 1 bis 3, worin X in Formel (V) für Bisphenol A steht.

**13.** Formmasse nach einem der Ansprüche 1 bis 3, enthaltend Pfropfpolymerisate aus B. 1) 5 bis 95Gew.- Teile, einer Mischung aus

B. 1.1) 50 bis 95 Gew.- Teilen Styrol, $\alpha$- Methylstyrol, methylkemsubstituiertem Styrol, $C_1$- $C_8$- Alkylmethacrylat, $C_1$- $C_8$- Alkylacrylat, oder Mischungen dieser Verbindungen und
B. 1.2) 5 **bis** 5 0 Gew.- Teilen Acrylnitril, Methacrylnitril $C_1$- $C_8$- Alkylmethacrylaten, $C_1$- $C_8$- Alkylacrylat, Maleinsäureanhydrid, $C_1$- $C_4$- alkyl- bzw.- phenyl- N- substituierte Maleinimide oder Mischungen dieser Verbindungen auf
B.2) 5 bis 95 Gew.-Teilen einer kautschukhaltigen Pfropfgrundlage.

**14.** Formmasse nach einem der Ansprüche 1 bis 3, enthaltend als Kautschuke der Pfropfgrundlage B. 2 Dienkautschuke, Acrylatkautschuke, Silikonkautschuke, Silikon- Acrylat- Kompositkautschuke oder Ethylen- Propylen- Dien- Kautschuke.

**15.** Zusammensetzungen nach einem der Ansprüche 1 bis 3 enthaltend als Komponente E mindestens ein Additiv ausgewählt aus der Gruppe bestehend aus Flammschutzsynergisten, Antidrippingmittel, Gleit- und Entformungsmittel, Nukleiermittel, Stabilisatoren, Antistatika, Farbstoffe und Pigmente.

**16.** Formkörper hergestellt aus Formmassen gemäß Anspruch 1.

Europäisches Patentamt
European Patent Office
Office européen des brevets

# EUROPÄISCHER RECHERCHENBERICHT

Nummer der Anmeldung
EP 12 16 6035

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2002 348458 A (MITSUBISHI ENG PLASTIC CORP) 4. Dezember 2002 (2002-12-04)<br>* Zusammenfassung *<br>* Beispiele 2-4; Tabellen 1,2 *<br>----- | 1-16 | INV.<br>C08L69/00 |
| X,D | EP 1 003 809 A1 (BAYER AG [DE] BAYER MATERIALSCIENCE AG [DE])<br>31. Mai 2000 (2000-05-31)<br>* Ansprüche *<br>----- | 1-16 | |
| X,D | EP 0 983 315 A1 (BAYER AG [DE] BAYER MATERIALSCIENCE AG [DE])<br>8. März 2000 (2000-03-08)<br>* Ansprüche *<br>----- | 1-16 | |
| | | | RECHERCHIERTE SACHGEBIETE (IPC) |
| | | | C08L |

Der vorliegende Recherchenbericht wurde für alle Patentansprüche erstellt

1

| Recherchenort | Abschlußdatum der Recherche | Prüfer |
|---|---|---|
| Den Haag | 13. September 2012 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 12 16 6035

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-09-2012

| Im Recherchenbericht angeführtes Patentdokument | Datum der Veröffentlichung | Mitglied(er) der Patentfamilie | Datum der Veröffentlichung |
|---|---|---|---|
| JP 2002348458 A | 04-12-2002 | KEINE | |
| EP 1003809 A1 | 31-05-2000 | AU 9156998 A | 01-03-1999 |
| | | BR 9811886 A | 22-08-2000 |
| | | CA 2300216 A1 | 18-02-1999 |
| | | CN 1266449 A | 13-09-2000 |
| | | DE 19734659 A1 | 18-02-1999 |
| | | EP 1003809 A1 | 31-05-2000 |
| | | ES 2244080 T3 | 01-12-2005 |
| | | JP 2001512767 A | 28-08-2001 |
| | | JP 2011246723 A | 08-12-2011 |
| | | TW I251607 B | 21-03-2006 |
| | | US 6753366 B1 | 22-06-2004 |
| | | WO 9907780 A1 | 18-02-1999 |
| EP 0983315 A1 | 08-03-2000 | AR 015819 A1 | 30-05-2001 |
| | | AU 7763298 A | 11-12-1998 |
| | | BR 9809461 A | 20-06-2000 |
| | | CA 2290567 A1 | 26-11-1998 |
| | | CN 1257522 A | 21-06-2000 |
| | | DE 19721628 A1 | 26-11-1998 |
| | | EP 0983315 A1 | 08-03-2000 |
| | | ES 2268779 T3 | 16-03-2007 |
| | | JP 2001525879 A | 11-12-2001 |
| | | TW 464676 B | 21-11-2001 |
| | | US 2002072553 A1 | 13-06-2002 |
| | | WO 9853002 A1 | 26-11-1998 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1170141 A
- DE 1810993 A
- DE 2259565 A
- DE 2329548 A
- DE 2818679 A
- EP 900827 A
- EP 0363608 A
- EP 0704488 A
- EP 747424 A
- EP 1003809 A
- EP 0983315 A
- DE S1495626 A
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- DE OS2035390 A
- US PS3644574 A
- DE OS2248242 A
- GB PS1409275 A
- DE OS1694173 A
- US PS3564077 A
- DE OS2348377 A
- US PS3919353 A
- DE 3704657
- DE 3704655
- DE 3631540
- DE 3631539
- DE 2407674 A
- DE 2407776 A
- DE 2715932 A
- DE 1900270 A
- US PS3692744 A
- EP 0640655 A
- WO 0000541 A
- WO 0118105 A
- US PS3671487 A
- US 3723373 A
- US 3838092 A


### In der Beschreibung aufgeführte Nicht-Patentliteratur


- Chemistry and Physics of Polycarbonates. Interscience Publishers, 1964
- **HORBACH, A. ; VEIEL, U. ; WUNDERLICH, H.** *Makromolekulare Chemie,* 1965, vol. 88, 215-231
- **HOUBEN-WEYL.** Methoden der Organischen Chemie. Georg Thieme-Verlag, 1961, vol. 14/1, 393-406
- **C.B. BUCKNALL.** Toughened Plastics. Appl. Science Publishers, 1977
- **ULLMANNS.** Enzyklopädie der Technischen Chemie. 1980, vol. 19, 280 ff
- **M. HOFFMANN ; H. KRÖMER ; R. KUHN.** Polymeranalytik I und II. Georg Thieme-Verlag, 1977
- **W. SCHOLTAN ; H. LANGE.** *Kolloid, Z. und Z. Polymere,* 1972, vol. 250, 782-796
- Kunststoff-Handbuch. Carl-Hanser-Verlag, 1973, vol. VIII, 695 ff
- Ullmanns Enzyklopädie der technischen Chemie. 1979, vol. 18, 301 ff
- **HOUBEN-WEYL.** Methoden der organischen Chemie. vol. 12/1, 43
- *Beilstein,* vol. 6, 177
- **VON SCHILDKNECHT.** Vinyl and Related Polymers. John Wiley & Sons, Inc, 1962, 484-494
- **WALL.** Fluorpolymers. Wiley-Interscience, John Wiley & Sons, Inc, 1970, vol. 13, 623-654
- Modern Plastics Encyclopedia. Mc Graw-Hill, Inc, Oktober 1970, vol. 47, 134, 774
- Modern Plastics Encyclopedia. Mc Graw-Hill, Inc, Oktober 1975, vol. 52, 27, 28, 472
- **W. SCHOLTAN et al.** *Kolloid-Z. und Z. Polymere,* 1972, vol. 250, 782-796